# EUROPEAN PATENT APPLICATION

(11) **EP 4 391 133 A1**
(43) Date of publication of application: **26.06.2024**
(21) Application number: 23219834.1
(22) Date of filing: 22.12.2023
(51) Int. Cl.: H01M 10/052, H01M 50/105, H01M 50/117, H01M 50/121, H01M 50/122, H01M 50/124, H01M 50/126, H01M 50/131, H01M 50/14

(54) **CELL POUCH FILM HAVING HIGH RIGIDITY, HIGH FORMABILITY AND EXCELLENT INSULATION RESISTANCE PROPERTIES AND METHOD FOR PREPARING THE SAME, SECONDARY BATTERY USING THE CELL POUCH FILM AND METHOD FOR MANUFACTURING THE SECONDARY BATTERY**

(30) Priority: 22.12.2022 KR 20220182268
(71) Applicant: Youlchon Chemical Co., Ltd., Seoul 07057 (KR)
(72) Inventor: SONG, Nok Jung, 07057 Dongjak-gu, Seoul (KR); HAN, Hee Sik, 15430 Ansan-si, Gyeonggi-do (KR); JANG, Jee Eun, 15430 Ansan-si, Gyeonggi-do (KR)
(74) Representative: V.O.

(57) **Abstract**

Disclosed is a cell pouch film and a method for preparing the same, secondary battery using the same, and a method for manufacturing the secondary battery, wherein the cell pouch film includes at least an outer layer, a barrier layer, and a sealant layer which is an inner layer, the outer layer comprises a PET film of 7 to 12 µm on an outer side and a nylon film of 20 to 30 µm in an inner side, the barrier layer has a thickness of 60 to 80 µm, and the inner layer has a thickness of 60 to 100 µm. The cell pouch film is excellent in insulation resistance properties while having high rigidity and high formability, and this is useful as a medium and large size, particularly next-generation cell pouch for electric vehicles.

## Description

### Technical Field

The present specification relates to a cell pouch film having excellent high rigidity, high formability, and insulation resistance properties, particularly a medium-sized and large-sized cell pouch film and a method for preparing the same, and a secondary battery using the same and a manufacturing method thereof.
[National Research and Development Project Supporting The Present Invention]
[Assignment unique number] 1415181922
[Assignment number] 20022450
[Name of ministry] Ministry of Trade, Industry and Energy
[Name of project management organization] Korea Institute of Industrial Technology Evaluation and Planning
[Research project name] Material/Parts Package Type (Top Company)
[Research assignment name] Development of a next-generation secondary battery pouch capable of realizing more than twice the high adhesive strength at 60°C
[Contribution rate] 1/1
[Name of agency in charge of assignment] Youlchon Chemical Co., Ltd.
[Research period] 2022-09-01 ~ 2022-12-31
[Assignment unique number] 1415185612
[Assignment number] 20022450
[Name of ministry] Ministry of Trade, Industry and Energy
[Name of project management organization] Korea Institute of Industrial Technology Evaluation and Planning
[Research project name] Material/Parts Package Type (Top Company)
[Research assignment name] Development of a next-generation secondary battery pouch capable of realizing more than twice the high adhesive strength at 60°C
[Contribution rate] 1/1
[Name of agency in charge of assignment] Youlchon Chemical Co., Ltd.
[Research period] 2023-01-01 ~ 2023-12-31

### Background Art

Lithium secondary batteries (LiB) are applied to many applications based on various advantages such as high energy density and excellent output.

A cell pouch film is a laminated film for packaging of a multi-layer structure that surrounds an electrode group of such secondary batteries and electrolyte solution, and is a core component material that determines the stability, life properties, and operating durability of the battery, and is required to have mechanical flexibility and strength, high oxygen/water vapor barrier properties, high thermal sealing strength, chemical resistance properties to the electrolyte solution, electrical insulation, high temperature stability, and the like.

The cell pouch film is composed of an outer layer, a barrier layer, and an inner layer (a sealant layer). In general, the outer layer or the outermost layer is composed of a mixed material of nylon and polyethylene terephthalate (PET) etc., and heat resistance properties, pinhole resistance properties, chemical resistance properties, insulation properties, formability, and the like are required as properties of the outermost layer.

Since the barrier layer serves as an overall support and is a barrier layer, barrier properties against water vapor and other gases and physical strength properties are required, and it can be said that the barrier layer is an important layer where the metal residual rate and formability of the barrier layers after forming are particularly most required. In this respect, aluminum (Al) is the most used in the barrier layer, and in recent years, SUS materials are under development despite the high price because the SUS material has good physical rigidity and durability.

The sealant layer of the inner layer is a surface in direct contact with the electrolytic solution resistance, and is required to have thermal adhesive formability, chemical resistance properties, anti-moisture permeation properties, insulation properties, and the like.

As the application of lithium secondary batteries (LiB) is expanded from small-sized to medium-sized to large-sized fields such as automobiles and/or energy storage systems (ESS), secondary battery pouch films also need characteristics suitable for such medium-sized to large-sized fields.

Among them, the medium and large cell size and the forming depth of the cell pouch to that end are factors that greatly affect the secondary battery capacity. The cell size thereof is larger than that of general small-sized secondary batteries and most medium and large cell pouches are produced by double forming, which requires high formability. In addition, the forming depth of the cell pouches determines the capacity of the cells. Thus, the deeper forming is essential to reach 700Wh/L, which is the required capacity of next-generation secondary batteries.

In the competitive landscape between the pouch-type battery and the prismatic battery, together with the forming depth of the cell pouch as described above, the stiffness of the cell pouch film is low compared to the prismatic shape and makes the cell pouch disadvantageous in terms of shape and dimensional stability, and the physical rigidity is low in comparison to the prismatic shape so that defects due to external impact may also be likely to occur. As a result, the requirements for high rigidity and high formability are increasing for medium-sized and large-sized cell pouch films, especially for cell pouch films for automobiles.

### Disclosure of Invention

### Technical Problem

In exemplary embodiments of the present invention, in one aspect, provided are a cell pouch film, a method for preparing the same, and a secondary battery using the same and a manufacturing method thereof, where, in one aspect, the cell pouch films may realize excellent mechanical properties (rigidity) and excellent formability by resolving problems that are difficult to improve in a conventional pouch configuration in terms of high rigidity and high formability.

In one exemplary embodiment of the present invention, in another aspect, provided are a cell pouch film, a method for preparing the same, a secondary battery using the same and a manufacturing method thereof, where the cell pouch films are excellent in insulation resistance properties while having high rigidity and high formability as described above.

### Solution to Problem

In exemplary embodiments of the present invention, provided are a cell pouch film in which at least an outer layer, a barrier layer, and a sealant layer which is an inner layer are structured in that order, the outer layer is composed of a PET film of 7 to 12 µm on the outer side and a nylon film of 20 to 30 µm in the inner side, the barrier layer is made of a metal having 60 to 80 µm, the inner layer is 60 to 90 µm and the moisture permeation amount measured by the following method is 115 ppm or less, and a method for preparing the same.

### [Method for Measuring Moisture Permeation Amount]

A cell pouch film is made 200 mm wide by 100 mm long. Prepared specimen is folded in half in width direction and two-sided sealing is done (sealing condition: 200°C: 1.8 seconds), and after 20 g of electrolyte solution is injected, the remaining side is sealed under the same condition.

After storage under the condition of 60°CRH90% for 4 weeks, a concentration (ppm) of HF (hydrofluoric acid) in substances present in the electrolyte solution is subjected to acid-base titration(HF titration) and a moisture permeation amount inside is measured.

In one exemplary embodiment, the barrier layer may be made of one or more of aluminum, iron, copper, nickel, SUS alloy.

In one exemplary embodiment, the barrier layer may be made of aluminum.

In one exemplary embodiment, the outer layer may consist of a PET film of 12 µm on the outside and a nylon film of 25 µm on the inside, the barrier layer may be made of aluminum having 60 µm thickness, and the inner layer may have 80 µm thickness.

In one exemplary embodiment, when evaluated by load (N/15 mm) with a universal tester (UTM), the specimen of the cell pouch film may have the following tensile strength, elongation at break, and puncture strength properties.
Tensile strength in MD direction 220-250N/15 mm,
Elongation at break in MD direction: 60 to 90%,
Tensile strength in the TD direction 230-260N/15 mm,
Elongation at break in the TD direction: 70 to 90%,
Puncture Strength 33-43N

In one exemplary embodiment, the cell pouch film may have a stiffness of 900 N/15 mm or more in each of the MD direction and the TD direction as measured by the following method.

### [Method for Measuring Stiffness]

After the specimen of the cell pouch film is deformed into a loop shape, the maximum resistance force (N/15 mm) at which the loop can maintain its shape is measured by applying a force to the loop with a press machine, and is indicated as a stiffness degree.

In one exemplary embodiment, the cell pouch film may have a formability of 13-20 mm as measured by the following method.

### [Method for Measuring Formability]

When forming 10 cell pouch film samples with a forming machine, the forming depth at which crack does not occur in all 10 samples is defined as the max forming depth, by which the formability is measured.

In exemplary embodiments of the present invention, further provided is a method for preparing a cell pouch film described above, the method comprising laminating an outer layer, a barrier layer, and a sealant layer that is an inner layer, wherein the outer layer is composed of a PET film of 7-12 µm on the outer side and a nylon film of 20-30 µm in the inner side, the barrier layer is made of a metal having 60-80 µm, and the inner layer is comprised of 60 to 100 µm.

In exemplary embodiments of the present invention, further provided is a second battery enclosed with the cell pouch film described above.

In one exemplary embodiment, the secondary battery may be for an electric vehicle or an energy storage device.

In exemplary embodiments of the present invention, also provided is a method of manufacturing a secondary battery, the method comprising a step of enclosing the secondary battery with the cell pouch film described above.

### Advantageous Effects of Invention

The cell pouch film of exemplary embodiments of the present invention may be excellent in insulation resistance properties while having high rigidity and high formability, and thus is effective as medium-sized and large-sized cell pouch films, particularly as next-generation cell pouch films for electric vehicles.

### Brief Description of Drawings

The above and other aspects, features and advantages of the disclosed exemplary embodiments will be more apparent from the following detailed description taken in conjunction with the accompanying drawings in which:
FIG. 1 is a schematic diagram illustrating a configuration of a medium and large sized cell pouch film according to one exemplary embodiment of the present invention.
FIGs. 2A to 2C are a schematic diagram for explaining a method for measuring stiffness in experimental examples of the present invention.
FIG. 3 is a schematic diagram showing the dummy cell evaluation method of Experiment 3 of the present invention.

### Mode for the Invention

Exemplary embodiments are described more fully hereinafter. The invention may, however, be embodied in many different forms and should not be construed as limited to the exemplary embodiments set forth herein. Rather, these exemplary embodiments are provided so that this disclosure will be thorough and complete, and will fully convey the scope of the invention to those skilled in the art. In the description, details of features and techniques may be omitted to more clearly disclose exemplary embodiments.

### Term Definition

In this disclosure, high rigidity means having high tensile strength at break, elongation at break, stiffness, and puncture strength. For example, as will be described later, the high rigidity may mean that it has a rigidity such as a tensile strength at break and an elongation at break by 50% or more, a hardness by 200% or more, and a puncture strength by at least 20% compared to the comparative example pouch A140.

In this disclosure, high formability means having a max forming depth. For example, as described later, it may mean a pouch in which the max forming depth is improved by 30% or more, preferably 40% or more compared to the comparative example pouch A140.

In this disclosure, the insulation resistance properties means the effect of the sealant layer insulating between the electrolyte layer and the barrier layer when a voltage, in particular, a high voltage (e.g., 1000V) is applied, which is expressed as an insulation resistance value.

In this disclosure, the moisture permeation properties are measured for the moisture permeability inside the film after the production and sealing of the cell pouch film.

In this disclosure, a metal is meant to include a metal alloy.

In this disclosure, the inner side in the outer layer may mean a layer in the outer layer that is located relatively closer to the barrier layer, and the outermost side in the outer layer may refer to a layer in the outer layer that is located farther than the inner side from the barrier layer.

### Description of Exemplary Embodiments

Exemplary embodiments of the present invention are described below.

As for medium and large sized cell pouch films, cell pouch films where 40 µm of aluminum (Al) is generally used as a barrier layer and total thickness is 90 to 160 µm have been used to date. In the case of 40 µm of aluminum (Al), the remaining thickness after forming is 25 to 30 µm, and it can be said that that thickness of aluminum(Al) is the most minimized thickness in terms of aluminum's (Al) pinhole prevention and price.

However, if using aluminum (Al) 40 µm as currently, it is difficult to satisfy the high rigidity and high formability properties which are requested to meet the required capacity to compete with the aforementioned prismatic battery and go for the next generation secondary battery.

In exemplary embodiments of the present invention, in order to overcome the limitations of existing pouch-type films and maximize the high-rigidity high-formability required for the development of next-generation batteries, suitable configurations of each layers have been studied while aluminum (Al) thicknesses being made thicker, leading to the achievement of the present invention.

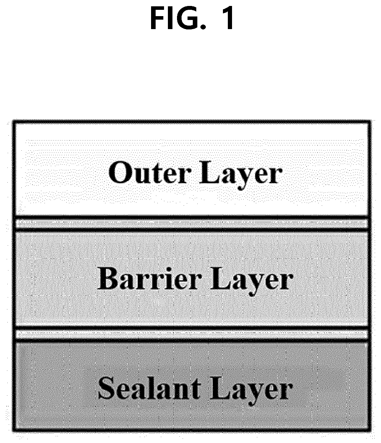

FIG. 1 is a schematic diagram illustrating a medium and large sized cell pouch film structure in accordance with one exemplary embodiment of the present invention.

As shown in FIG. 1, in one exemplary embodiment, the cell pouch film includes an outer layer, a barrier layer, and a sealant layer which is an inner layer in order.

Specifically, in exemplary embodiments of the present invention, provided is a cell pouch film suitable for, in particular, medium and large sized cell pouch films, comprising at least an outer layer, a barrier layer and an inner layer (sealant layer), wherein the outer layer comprises an outermost 7-12 µm PET film and an inside 20-30 µm nylon film, the barrier layer is a single metal or metal alloy having 60-80 µm thickness, and the inner layer has 60-90 µm thicknes.

The barrier layer is excellent in terms of formability and puncture strength when the barrier layer has a thickness of 60 µm or more. In addition, the thicker the thickness, the better the mechanical rigidity such as tensile strength, elongation at break, and stiffness, but when it exceeds 80 µm, there is a possibility that the rolling process becomes difficult, so 60-80 µm may be applicable. When the barrier layer is less than 60 µm, the formability, the puncture strength, and the moisture permeation prevention property may be lowered.

In a non-limiting example, the barrier layer may have a thickness of 60 µm or more, 61 µm or more, 62 µm or more, 63 µm or more, 64 µm or more, 65 µm or more, 66 µm or more, 67 µm or more, 68 µm or more, 69 µm or more, 70 µm or more, 71 µm or more, 72 µm or more, 73 µm or more, 74 µm or more, 75 µm or more, 76 µm or more, 77 µm or more, 78 µm or more, and 79 µm or more. Alternatively, it may have a thickness of 80 µm or less, 79 µm or less, 78 µm or less, 77 µm or less, 76 µm or less, 75 µm or less, 74 µm or less, 73 µm or less, 72 µm or less, 71 µm or less, 70 µm or less, 69 µm or less, 68 µm or less, 67 µm or less, 66 µm or less, 65 µm or less, 64 µm or less, 63 µm or less, 62µm or less, or 61 µm or less.

In a non-limiting example, the barrier layer may have a thickness of 70-80 µm or preferably of 75-80 um.

In a non-limiting example, the barrier layer may be made of aluminum (Al), iron (Fe), copper (Cu), nickel (Ni), or a SUS alloy, and aluminum (AI) may be preferable.

In terms of formability, nylon in the outer layer preferably has a thickness of 20 µm or more and more preferably of 25 µm and more, but when the nylon thickness exceeds 30 µm, the insulation breakdown voltage may decrease. Accordingly, the preferred nylon thickness may be 20 µm to 30 µm, preferably 25 µm to 30 µm. When the nylon is smaller than 20 µm, the formability may be low.

In the outer layer, when the thickness of the PET film is thinner and the thickness of the nylon film is thicker, the formability may become better. However, a thinner PET thickness may be disadvantageous in terms of insulation breakdown voltage, and from this viewpoint, preferably the PET film may have a thickness of 7 µm to 12 µm.

On the other hand, when the sealant layer, which is the inner layer, is less than 60 µm, the insulation resistance properties may be significantly deteriorated. In addition, the overall thickness of the cell pouch film may increase when it exceeds 90 µm, which may lead to a non-preferable effect in terms of R value and clearance of the forming design during pouch forming. Therefore, from the viewpoint of insulation resistance properties, the sealant layer may preferably have thickness of 60 to 100 µm, 70 µm to 100µm, or 80 to 100 µm. For example, it may have thickness of 60 µm or more, 65 µm or more, 70 µm to more, 75 µm or more, 85 µm or more, 90 µm or more, or 95 µm or more. Alternatively, ir may have thickness of 100 µm or less, 95 µm or less, 90 µm or less, 85 µm or less, 80 µm or less, 75 µm or less, 70 µm or less, or 65 µm or less.

On the other hand, it is preferable that the thickness of the sealant layer, which is the inner layer, is adjusted by also considering the thicknesses of the barrier layer in terms of the insulation resistance properties and the moisture permeation amount.

In particular, in the case where the thickness of the barrier layer is larger than 70 µm, for example, 75 to 80 µm as shown in the experimental examples described later, the thickness for the sealant layer may preferably be 80 to 100 µm in terms of insulation resistance properties and moisture permeation amount. In addition, when the sealant layer has a thickness of less than 80 µm while the thickness of the barrier layer is greater than 70 µm, the insulating resistance properties and the moisture permeation amount may decrease.

In a non-limiting example, the sealant layer, which is the inner layer, may be made of polypropylene (PP), polyethylene (PE), or the like, and may be preferably made of a polypropylene (PE) layer, and more preferably a cast polypropylene (CPP) film. In addition, the sealant layer, which is an inner layer, may be made of one or more layers, and may have a three-layer structure such as a skin layer/core layer/skin layer, for example.

In one exemplary embodiment, a typical adhesive may be used for the adhesive layer between the outer layer and barrier layer or the adhesive layer between the barrier layer and the inner layer, and the adhesive layer may have a thickness of, for example, 1-5 µm.

In one exemplary embodiment, the cell pouch film may have a tensile strength of 220 to 250 N/15 mm in the MD direction, an elongation at break of 60 to 90% in the MD direction, a tensile strength of 230 to 260 N/15mm in the TD direction, an elongation at break of 70 to 90% in the TD direction, a formability of 13 to 20 mm, and a puncture strength of 33 to 43 N, as in the experimental example described below.

In addition, the firmness is preferably 900 N/15 mm or more in each of the MD and TD directions.

In a non-limiting example, the stiffness may be 900 N/15 mm or more, 1000 N/15mm or more, 1100 N/15m or more, or 1200 N/15 m or more in each of the MD and TD directions, and, for example, may be from 900 N/15 mm to 1300 N/15 mm. The stiffness may be most affected by the thickness of the barrier layer, but as the outer layer becomes thinner, the stiffness may also decrease.

In addition, the moisture permeation amount measured by the method described below may be preferably 115 ppm or less, 110 ppm or less, 105 ppm or less, 100 ppm or less, 95 ppm or less, 90 ppm or less, 85 ppm or less, or 80 ppm or less. The lower value of the moisture permeation amount could be, for example, 50 ppm or higher but not limited thereto.

In order to achieve a good moisture permeation amount, it is preferable that the aluminum thickness be as large as 60 µm or more, and the sealant layer which is the inner layer be as thick as 80 µm or more.

On the other hand, exemplary embodiments of the present invention provide a secondary battery externally enclosed with the cell pouch films described above. These secondary batteries may typically be lithium secondary batteries, and in particular, be medium and large sized secondary batteries such as electric vehicles (EVs), energy storage devices (ESSs), etc.

In addition, in exemplary embodiments of the present invention, provided is a method for preparing a cell pouch film as described above, the method including laminating an outer layer, a barrier layer, and a sealant layer that is an inner layer, wherein the outer layer is composed of a PET film of 7 to 12 µm on the outside and is made of a nylon film of 20 to 30 µm on the inside, the barrier layer is formed of a metal having a thickness of 60 to 80 µm; and the inner layer (sealant layer) is formed to have a thickness of 60 to 90 µm.

Illustrative embodiments of the present invention are described in more detail through the following examples. The embodiments disclosed herein are illustrated for purposes of illustration only, and embodiments of the invention may be embodied in various forms and should not be construed as limited to the embodiments set forth herein.

### [Examples and Comparative Examples]

The cell pouch film of the outer layer/barrier layer/inner layer is constructed as shown in Table 1 below. Polyolefin-based adhesives are used as the adhesives for bonding the outer layer and the barrier layer, and for bonding the barrier layer and the inner layer. In Examples and Comparative Examples, the configurations are identical with variations only in thickness as indicated in Table 1 below.

**[Table 1]**

| | **Compar ative Exampl e** | **Example 1** | **Example 2** | **Example 3** | **Example 4** | **Example 5** | **Example 6** | **Example 7** |
|---|---|---|---|---|---|---|---|---|
| PET | 12 | 12 | 12 | 7 | 12 | 12 | 12 | 12 |
| ADHE SIVE | 3 | 3 | 3 | 3 | 3 | 4 | 4 | 4 |
| Ny | 15 | 25 | 25 | 30 | 25 | 25 | 25 | 25 |
| ADHE SIVE | 3 | 3 | 3 | 3 | 3 | 4 | 4 | 4 |
| A1 | 40 | 60 | 80 | 60 | 60 | 80 | 75 | 80 |
| PP | 80 | 80 | 60 | 80 | 100 | 80 | 85 | 100 |
| **Total** | 153 | 183 | 183 | 183 | 203 | 205 | 205 | 225 |

As shown in Table 1 above, the cell pouch films of the respective Examples and Comparative Examples may be represented by PET12/Ny15/A140/PP80 (Comparative Example), PET12/Ny25/A160/PP 80 (Example 1), PET12/Ny25/A180/PP60 (Example 2), PET7/Ny30/Al 60/PP80 (Example 3), PET12/Ny25/A160/PP100 (Example 4), PET12/Ny25/A180/PP80 (Example 5), PET12/Ny25/A175/PP85 (Example 6), and PET12/Ny25/A180/PP100 (example 7).

### [Experiment 1]

In Examples and Comparative Examples, formability, mechanical strength of tensile strength/elongation at break, stiffness, puncture strength, as well as breakdown voltage and insulation resistance are measured according to the thicknesses of the barrier layer, the outer layer, and the inner layer, respectively.

The tensile strength, elongation at break, and puncture strength can be tested by evaluating the specimen under a load (N/15 mm) using a universal testing machine (UTM). The experimental conditions at this time are 50 mm for the grip gap and 50 mm/min for the speed. Specifically, each test method is as follows.

### <Method for Measuring Tensile Strength>

The cell pouch film specimen is prepared with dimensions of 140 mm×15 mm for MD (Machine Direction) measurement, and with dimensions of 15 mm×140 mm for TD (Transverse Direction) measurement. For reference, the size of the specimen may vary depending on the purpose and direction of tensile strength measurement such as MD and TD etc. UTM is used for evaluation. The conditions of the UTM are as follows:
- Evaluation speed: 50 mm/min
- Grip gap: 50 mm
- The breaking maximum is expressed as the tensile strength (N/15 mm).
- The elongation at break is measured by marking a 30mm section at the center of the specimen, and measuring the increase in length of the specimen after tensile strength testing.

### <Method for Measuring Stiffness>

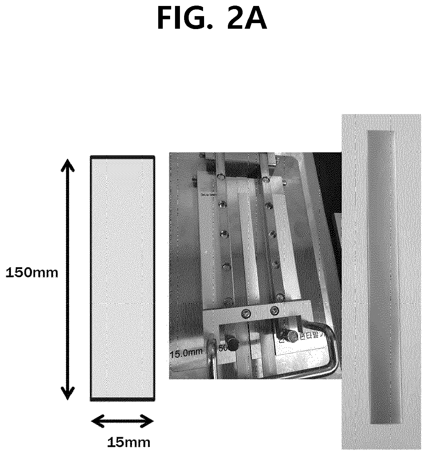

FIGs. 2A to 2C are a schematic diagram for describing the Loof Stiffness Test, which is a stiffness measurement method used in an experimental example of the present invention.

As shown in FIG 2A, the pouch film specimen is cut to have a width of 15 mm in each of the MD/TD directions. In the case of MD direction measurement, 150 mm×15 mm is prepared, and in the case of TD direction measurement, 15 mm×150 mm is prepared.

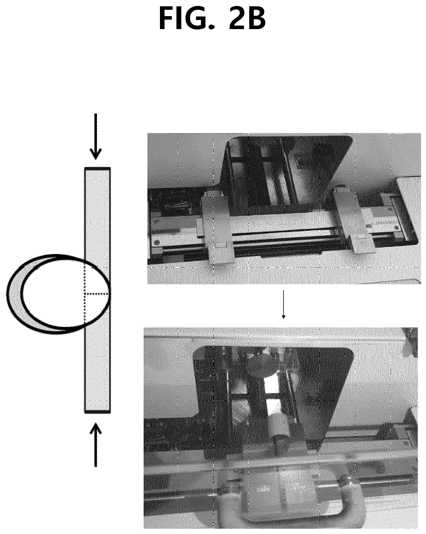

As shown in FIG. 2B, the corresponding specimen is deformed into a loop shape.

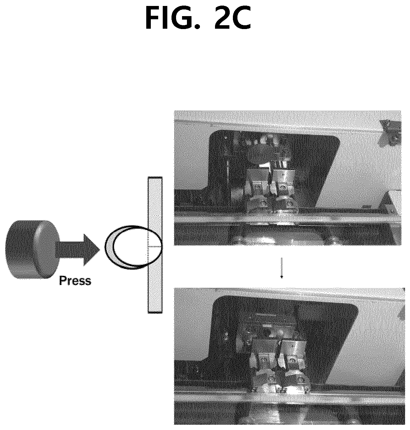

As shown in FIG. 2C, the maximum resistance force (N/15 mm) at which the loop retains its shape while applying a force to the loop area with a press machine (Triction Tester TR-2 manufactured by Toyoseiki, measured by applying force from 2 mmN to 2000 mN) is measured and this is indicated as a stiffness.

### <Method for Measuring Puncture Strength>

The pouch film specimen is prepared with dimensions of 400×40 mm, and is placed in a UTM jig to measure the puncture strength. The conditions of the UTM are as follows:
- Evaluation speed: 50 mm/min
- 1mm pin with a diameter of 0.05R is used.

### <Method for Measuring Formability>

As for the formability measurement method, the depth of maximum forming is recorded by measuring it with a vernier caliper when there are no cracks in the corner portion or pouch in case of forming 10 samples with forming machines for medium and large sized cell pouch films

### <Method for Measuring Moisture Permeation Amount>

The cell pouch film specimen is prepared to have a width of 200 mm and a length of 100 mm. The prepared specimen is folded in half in the width direction and sealed in two sides (200°C, 1.8 seconds). After 20 g of electrolyte solution is injected, the remaining side is sealed under the same conditions.

After storage for 4 weeks under the condition of RH90% at 60°C, the concentration (ppm) of HF (hydrofluoric acid) in the substances present in the electrolyte solution is subjected to acid-base titration(HF titration) to measure the amount of moisture permeation inside. For reference, HF (hydrofluoric acid) is a substance produced by moisture and thus the amount of moisture permeation can be determined by measuring its concentration.

The measurement results are shown in Table 2 and Table 3 below.

**[Table 2]**

| Items | | Unit | PET12/Ny25 /A140/PP80 | PET 12/Ny25 /A160/PP80 | PET12/Ny25 /A180/PP60 | PET7/Ny30/ A160/PP80 |
|---|---|---|---|---|---|---|
| | | | (Comparativ e example) | (Example 1) | (Example 2) | (Example 3) |
| Thickness | | µm | 153 | 183 | 183 | 183 |
| Tensile Strength | MD | N/15mm | ○ | Ⓞ | Ⓞ | Ⓞ |
| | | | >150 | >220 | >220 | >220 |
| | TD | | ○ | Ⓞ | Ⓞ | Ⓞ |
| | | | >160 | >230 | >230 | >230 |
| Stiffness | MD | N/15mm | △ | Ⓞ | Ⓞ | ○ |
| | | | >500 | >900 | >900 | >700 |
| | TD | | △ | Ⓞ | Ⓞ | ○ |
| | | | >500 | >900 | >900 | >700 |
| Puncture Strength | | N | ○ | Ⓞ | Ⓞ | Ⓞ |
| | | | >20 | >30 | >30 | >30 |
| Formability | MAX | mm | ○ | Ⓞ | Ⓞ | Ⓞ |
| | | | >9 | >13 | >13 | >13 |
| Insulation breakdown voltage (outer layer) | | kV | ○ | Ⓞ | Ⓞ | ○ |
| | | | >1500 | >1900 | >1900 | >1500 |
| Insulation breakdown voltage (inner layer) | | kV | ○ | Ⓞ | △ | Ⓞ |
| | | | >3000 | >3300 | >2000 | >3300 |
| Insulation resistance 1000V 30sec | | GΩ | 98 | 100 | 53 | 105 |
| Moisture Permeation Amount Moisture Barrier / HF Titration 60°C RH90% 4 weeks | | ppm | 124 | 104 | 183 | 110 |

**[Table 3]**

| Items | | Unit | PET12/Ny25 /A160/PP100 | PET12/Ny25 /A180/PP80 | PET12/Ny25 /A175/PP85 | PET 12/Ny25 /A180/PP100 |
|---|---|---|---|---|---|---|
| | | | (Example 4) | (Example 5) | (Example 6) | (Example 7) |
| Thickness | | µm | 203 | 205 | 205 | 225 |
| Tensile Strength | MD | N/15mm | Ⓞ | Ⓞ | Ⓞ | Ⓞ |
| | | | >220 | >220 | >220 | >220 |
| | TD | | Ⓞ | Ⓞ | Ⓞ | Ⓞ |
| | | | >230 | >230 | >230 | >230 |
| Stiffness | MD | N/15mm | Ⓞ | Ⓞ | Ⓞ | Ⓞ |
| | | | >900 | >1000 | >900 | >1000 |
| | TD | | Ⓞ | Ⓞ | Ⓞ | Ⓞ |
| | | | >900 | >1000 | >900 | >1000 |
| Puncture Strength | | N | Ⓞ | Ⓞ | Ⓞ | Ⓞ |
| | | | >30 | >40 | >35 | >40 |
| Formability | MAX | mm | Ⓞ | Ⓞ | Ⓞ | Ⓞ |
| | | | >13 | >14 | >13 | >14 |
| Insulation breakdown voltage (outer layer) | | kV | Ⓞ | Ⓞ | Ⓞ | Ⓞ |
| | | | >1900 | >1900 | >1900 | >1900 |
| Insulation breakdown voltage (inner layer) | | kV | Ⓞ | Ⓞ | Ⓞ | Ⓞ |
| | | | >3300 | >3300 | >3300 | >3300 |
| Insulation resistance 1000V 30sec | | GΩ | 130 | 102 | 115 | 140 |
| Moisture Permeation Amount Moisture Barrier / HF Titration 60°C RH90% 4 weeks | | ppm | 83 | 112 | 101 | 79 |

In the above tables, the expression ">numerical value" (which is referred to as numerical value 1 for convenience of understanding) means having a numerical value greater than the numerical value (numerical value 1). As well, if the data of other examples or comparative examples in the same evaluation item is also expressed as ">numerical value (which is referred to as numerical value 2 for convenience of understanding)" where numerical value 2 is a numerical value greater than the said numeral value 1, the expression ">numerical value (numerical value 1)" means having a numerical value greater than the numerical value 1 and smaller than the numerical value 2. For example, in the formability of the above [Table 2] and [Table 3], when the Comparative Example shows ">9" and the Example 1 shows ">13", it means that the formability of Example 1 is greater than 13 mm, and the formability of the Comparative Example is greater than 9 mm but less than 13mm.

On the other hand, the following [Table 4] presents the measured result of increate rate of the tensile strength, elongation at break, stiffness, formability and the puncture strength according to the thickness of the Al barrier layer (i.e., the increase rate of the Examples as compared to the Comparative Example) for A160 (60 µm) and A180 (80 µm) relative to A140 (Al 40 µm).

**[Table 4]**

| Items | | Unit | A160 (Example1) / A140 (Comparative example) | A180 (Example2) / A140 (Comparative example) |
|---|---|---|---|---|
| | | | Increase Rate | Increase Rate |
| Tensile Strength | MD | N/15mm | 1.6 | 2.1 |
| | TD | | 1.5 | 2.1 |
| Elongation at break | MD | % | 1.5 | 2.0 |
| | TD | | 1.7 | 2.2 |
| Stiffness | MD | N/15mm | 2.8 | 5.7 |
| | TD | | 2.7 | 5.7 |
| Puncture Strength | - | N | 1.3 | 1.4 |
| Formability | MAX | mm | 1.4 | 1.4 |

As can be seen from the above table, the physical properties of the cell pouch film in each case of Al 40, Al 60, and Al 80 are compared to Al 40 as a reference. The results indicate that the mechanical rigidity increases as the thickness increases. In other words, it is observed that the tensile strength and elongation at break increase proportionally with the thickness, and in the case of stiffness, it increases at a rate nearly squared compared to the thickness increase rate. However, it might be challenging to manufacture thickness exceeding Al 80 due to the limitation of the rolling process of the Al foil. In addition, in the case of Al 60, the formability and the puncture strength increase compared to Al 40, but it appears that there are no significant differences in formability or puncture strength at thickness greater than that.

Meanwhile, in Examples 1 and 3 mentioned above, the thickness of Al is set to 60 µm while the thicknesses of PET and nylon vary.

As observed in Examples 1 and 3 in Tables 2 and 3, as the thickness of the nylon increases, the formability improves, but the insulation breakdown voltage is lower in the case of the PET7 µm/Ny30 µm configuration. Additionally, there is no significant differences in formability from Ny25 µm.

### [Experiment 2]

On the other hand, in Experiment 2, insulation resistance properties and formability are evaluated for each thickness of the sealant layer which is an inner layer.

That is, the PP sealant layer is fabricated by thickness on PET12/Ny25/A160 (i.e., PET12/Ny25/A160/PP (each thickness in Table 5 below)), and insulation resistance is measured.

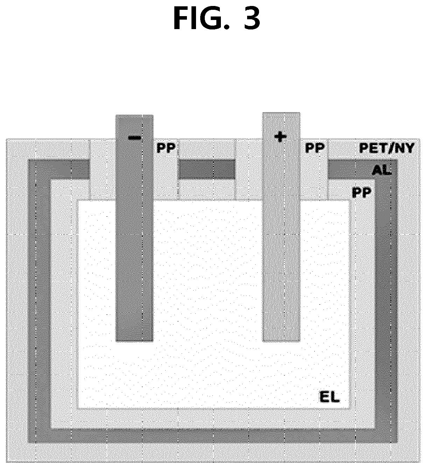

Specifically, for the insulation resistance measurement, a 30 mm×40 mm Dummy Cell (small cell) is fabricated, and the insulation resistance value (GΩ) is measured and recorded by applying 1000V to the aluminum tab portion and the aluminum layer (barrier layer) portion of the pouch using an insulation resistance measuring device. FIG. 3 is a schematic diagram showing the dummy cell evaluation method of Experiment 3 of the present invention.

**[Table 5]**

| | | | | | | | |
|---|---|---|---|---|---|---|---|
| Sealant layer PP thickness(µm) | 40 | 50 | 60 | 70 | 80 | 90 | 100 |
| Insulation Resistance (GΩ) | Max 10GΩ | Max 20GΩ | Max 30GΩ | Max 40GΩ | Max 130GΩ | Max 150GΩ | Max 150GΩ |
| (Measured based on 10 each) | | | | | | | |

As observed from the table above, it is more preferable for the sealant layer's thickness to be 80 µm or greater than 60 µm or 70 µm in terms of insulation resistance. In other words, the evaluation of insulation resistance properties based on the thickness of the PP layer, which serves as the sealant layer, indicates that insulation properties start to increase significantly from the 80 µm range. Beyond 80 µm, the rate of increase becomes more gradual while still maintaining values of 100 GQ or more.

In addition, as evident from [Table 2] and [Table 3] described above, when the thickness of the barrier layer exceeds 70 µm, the insulation resistance is low and the moisture permeation amount is high especially when the sealant layer has a thickness of 60 µm (Example 2). Therefore, in situation where the thickness of the barrier layer exceeds 70 µm, it is advantageous in terms of insulation resistance properties and moisture permeation amount properties to have a sealant layer thickness of 80 µm or greater.

As can be seen from the above experimental results, the optimum thickness combination for the medium and large sized cell pouch film is considered to be PET12/Ny25/A160 to 80/PP80 to 100 in terms of high rigidity, excellent formability, good insulation resistance properties. That is, increased Al thickness may enhance rigidity, thereby satisfying high rigidity

Furthermore, starting from Al 60, it exhibits excellent puncture strength of 30N or more, but there might be no significant differences from Al 60 onwards. In terms of stiffness, a thicker Al thickness tends to yield better results.

In the case of formability, thinner PET thickness and thicker Ny thickness yield excellent results (Example 3). However, as observed in Example 3, thinner PET thickness is unfavorable for insulation breakdown voltage (Example 3).

On the other hand, as confirmed in Experiment 2 above, the insulation resistance is maintained at a stable value of at least 100 GQ when the PP layer, which is the sealant layer, has a thickness of 80 µm or more.

As a result, it is noted that the PET12/Ny25/A160 to 80/PP80 to 100 configuration can be a configuration suitable for various properties for medium and large-sized cell pouch.

Although the non-limiting and exemplary embodiments of the present invention have been described above, the technical idea of the invention is not limited to the accompanying drawings or the above description. It will be apparent to those skilled in the art that various forms of modifications may be made without departing from the spirit of the present invention, and such forms of modification shall fall within the scope of the claims of the invention.

## Claims

1. A cell pouch film, comprising:
at least an outer layer, a barrier layer, and a sealant layer that is an inner layer are structured in this order,
wherein the outer layer is composed of PET film of 7 to 12 µm outside and nylon film of 20 to 30 µm inside,
the barrier layer is made of a metal having a thickness of 60 to 80 µm,
the inner layer has a thickness of 60 to 100 µm, and
a moisture permeation amount is 115 ppm or less as measured by the following method.
[Method for Measuring Moisture Permeation Amount]
A cell pouch film is made 200 mm wide by 100 mm long. Prepared specimen is folded in half in width direction and two-sided sealing is done (sealing condition: 200°C: 1.8 seconds), and after 20 g of electrolyte solution is injected, the remaining side is sealed under the same condition.
After storage under the condition of 60°CRH90% for 4 weeks, a concentration (ppm) of HF (hydrofluoric acid) in substances present in the electrolyte solution is subjected to acid-base titration(HF titration) and a moisture permeation amount inside is measured.

2. The film according to claim 1, wherein the barrier layer is made of one or more of aluminum, iron, copper, nickel, and a SUS alloy.

3. The film according to claim 1, wherein the barrier layer is made of aluminum.

4. The film according to claim 1, wherein the outer layer is composed of a PET film of 12 µm outside and a nylon film of 25 µm inside,
the barrier layer is made of aluminum having a thickness of 60 µm, and
the inner layer has a thickness of 80 µm.

5. The film according to claim 1, wherein the film has the following tensile strength, elongation at break, and puncture strength properties when a specimen of the cell pouch films is evaluated by a universal testing machine (UTM) under a load (N/15 mm).
Tensile strength in MD direction of 220-250N/15 mm,
Elongation at break in MD direction of 60 to 90%,
Tensile strength in the TD direction of 230-260N/15 mm,
Elongation at break in the TD direction of 70 to 90%,
Puncture Strength of 33-43N

6. The film according to claim 1, wherein the cell pouch film has a stiffness of 900 N/15 mm or more in each of the MD direction and the TD direction as measured by the following method.
[Measurement Method of Stiffness]
After the specimen of the cell pouch film is deformed into a loop shape, the maximum resistance force (N/15 mm) that can maintain the shape of the loop is measured by applying a force to the loop with a press machine, and is indicated as a stiffness.

7. The film according to claim 1, wherein the cell pouch film has a formability of 13 to 20 mm as measured by the following method.
[Method for Measuring Formability]
When forming 10 cell pouch film samples with a forming machine, the forming depth at which crack does not occur in all 10 samples is defined as the max forming depth, by which the formability is measured.

8. A secondary battery externally enclosed with the cell pouch film according to any one of claims 1 to 7.

9. The film according to claim 8, wherein the secondary battery is a lithium secondary battery.

10. The film according to claim 8, wherein the secondary battery is for an electric vehicle or an energy storage device.

11. A method for preparing a cell pouch film according to any one of claims 1 to 7, comprising:
laminating an outer layer, a barrier layer, and a sealant layer that is an inner layer,
wherein the outer layer is composed of an PET film of 7 to 12 µm outside and an nylon film of 20 to 30 µm inside,
the barrier layer is made of a metal having a thickness of 60 to 80 µm, and
the inner layer is configured to have a thickness of 60 to 100 µm.
